# EUROPÄISCHE PATENTANMELDUNG

(11) **EP 1 712 263 A1**
(43) Veröffentlichungstag der Anmeldung: **18.10.2006**
(21) Anmeldenummer: 05101326.6
(22) Anmeldetag: 22.02.2005
(51) Int. Cl.: B01D 11/04, B01D 17/02

(54) **Vorrichtung und Verfahren zur automatischen Flüssig-Flüssigextraktion, Verfahren zum Transfer einer Phase und Zusatzmodul für ein Synthesegerät**

(71) Anmelder: Büchi Labortechnik AG, CH-9230 Flawil (CH)
(72) Erfinder: CASANOVA, Daniel, 8400 Winterthur (CH)
(74) Vertreter: Hepp, Dieter

(57) **Zusammenfassung**

Die vorliegende Erfindung betrifft eine Vorrichtung zur automatischen Flüssig-Flüssigextraktion. Die Vorrichtung umfasst mindestens einen Reaktionsbehälter (R) und eine Transfereinheit (T) zum Transferieren einer Phase (P1) einer phasengetrennten mehrphasigen Flüssigkeit aus dem Reaktionsbehälter (R) in mindestens einen weiteren Behälter. Die Transfereinheit (T) enthält Mittel zum Bestimmen des Phasenvolumens und Mittel zum Messen des transferierten Volumens, so dass die gesamte Phase aus dem Reaktionsbehälter (R) in den weiteren Behälter (B) transferierbar ist.

## Beschreibung

Die vorliegende Erfindung betrifft eine Vorrichtung und ein Verfahren zur automatischen Flüssig-Flüssigextraktion, ein Verfahren zum Transfer einer Phase und ein Zusatzmodul für ein Synthesegerät gemäss den unabhängigen Patentansprüchen.

Flüssig-Flüssigextraktion gehört zum üblichen Handwerk im chemischen Labor. Bisher wird die Extraktion üblicherweise manuell im Schcheidetrichter durchgeführt. Dies hat jedoch einerseits den Nachteil, dass es aufwändig und zeitraubend ist, andererseits erfordert es die manuelle Handhabung von teilweise aggressiven oder giftigen Substanzen.

Ein Verfahren zur automatischen Flüssig-Flüssigextraktion ist aus der japanischen Patentanmeldung JP 10-260118 bekannt. Das Verfahren ist auf die Extraktion von Medikamenten aus Blutproben gerichtet. Es wird immer die gleiche Menge einer Probe und das gleiche Lösungsmittel benötigt. Mit einer Spritze wird immer die gleiche vorgegebene Menge der extrahierten Probe in ein Analysegefäss transferiert. Da im Laboralltag unterschiedliche Proben, unterschiedliche Lösungsmittel und unterschiedliche Probenmengen verwendet werden, ist dieses Verfahren kaum einsetzbar.

Ein Verfahren zur Trennung von phasengetrennten Flüssigkeiten, z.B. nachdem eine Flüssig-Flüssigextraktion vorgenommen wurde, ist in EP 1 093 835 gezeigt. Die Flüssigkeiten werden in eine Trennkammer transferiert und dort ruhen gelassen, bis die Phasen vollständig getrennt sind. Am Auslass der Kammer befindet sich ein Detektor, welcher die Beschaffenheit, insbesondere den elektrischen Widerstand misst. Bei der Phasengrenze ist ein Sprung im Widerstand detektierbar. Sobald beim Auslassen der Flüssigkeit eine Änderung im Widerstand gemessen wird, wird der Auslass gestoppt. Die beiden Phasen sind dann getrennt. Weil das Produkt die Messung beeinflussen kann, ist diese Trennung jedoch nicht so zuverlässig, wie es für gewisse Anwendungen gewünscht wäre.

Es ist daher Aufgabe der vorliegenden Erfindung, die Nachteile des bekannten zu überwinden und insbesondere eine Vorrichtung und ein Verfahren zur automatischen Flüssig-Flüssigextraktion zu schaffen, welche für den Einsatz in chemischen Labors geeignet sind und das manuelle Extrahieren von Proben ersetzen können.

Diese und weitere Aufgaben werden mit der Vorrichtung, den Verfahren und dem Zusatzmodul gemäss den unabhängigen Ansprüchen gelöst.

Die Vorrichtung zur automatischen Flüssig-Flüssigextraktion umfasst mindestens einen Reaktionsbehälter und eine Transfereinheit zum Transferieren einer Phase einer phasengetrennten mehrphasigen Flüssigkeit aus dem Reaktionsbehälter in mindestens einen weiteren Behälter. Der Reaktionsbehälter und die Transfereinheit sind durch eine Verbindungsleitung, z.B. einen Schlauch, verbunden. Die Form des Reaktionsbehälters ist frei wählbar und kann z.B. je nach Bedarf becher- oder kolbenförmig sein. Für gewisse Anwendungen ist ein verschliessbarer Behälter von Vorteil, beispielsweise wenn bei der Extraktion gesundheitsschädigende Verbindungen verwendet werden.

Die Extraktion findet im Reaktionsbehälter statt. Die Probe und das Lösungsmittel werden in den Reaktionsbehälter gegeben und dort vermischt, beispielsweise mit einem Rührer. Nach einer vorgegebenen Rührzeit wird die Mischung ruhen gelassen, bis eine vollständige Phasentrennung stattgefunden hat. Die Rührzeit und die Zeit für die Phasentrennung hängen von der Probe und vom Lösungsmittel ab.

Anschliessend wird eine der beiden Phasen mit der Transfereinheit in einen weiteren Behälter transferiert. Je nach Anwendung und Ausführungsform kann die schwerere oder die leichtere Phase transferiert werden.

Die Transfereinheit kann Mittel zum Erzeugen eines Unterdrucks umfassen, beispielsweise eine Pumpe oder eine Spritze. Wenn der Reaktionsbehälter über einen verschliessbaren Auslass verfügt, kann die Transfereinheit auch geeignet sein, diesen Auslass, z.B. einen Hahnen, zu betätigen.

Der weitere Behälter kann von gleicher Art sein wie der Reaktionsbehälter, es kann sich dabei aber auch um ein Analysegefäss handeln. Andere Gefässe sind ebenfalls denkbar.

Die Vorrichtung enthält Mittel weiter zum Bestimmen des Phasenvolumens von mindestens jener der beiden Phasen, welche transferiert werden soll. Bei den Mitteln muss es sich nicht zwingend um eine Messanordnung handeln. Die Mittel können mechanisch oder rechnerisch gegeben sein. Wenn beim Einfüllen der Probe und des Lösungsmittels die exakten Mengen bekannt sind, beispielsweise aufgrund einer Skala im Gefäss, können die Phasenvolumina auch manuell eingegeben werden. Dann sind die Mittel zum Bestimmen des Phasenvolumens durch eine entsprechende Schnittstelle für die Eingabe gegeben. Die Phasenvolumen können auch während der Beigabe der Probe und/oder des Lösungsmittels bestimmt werden.

Die Transfereinheit umfasst weiter Mittel zum Messen des transferierten Volumens. Unter Kenntnis des Phasenvolumens und des transferierten Volumens, kann somit vorzugsweise die gesamte

Phase aus dem Reaktionsbehälter in den weiteren Behälter transferiert werden.

Ein weiterer Aspekt der Erfindung betrifft eine Vorrichtung zur automatischen Flüssig-Flüssigextraktion, bei welcher in einer Verbindungsleitung zwischen einer Transfereinheit und einem Reaktionsbehälter mindestens ein Mehrwegventilsystem zum selektiven Verbinden der Transfereinheit mit weiteren Behältern vorgesehen ist. Beim Mehrwegventilsystem kann es sich insbesondere um einen Verteilhahnen handeln. Es sind aber auch mehrere hintereinander geschaltete Ventile denkbar.

Der Hauptvorteil einer solchen Vorrichtung ist, dass sie flexibel für Laborzwecke eingesetzt werden kann. Wenn die gesamte

Phase transferiert werden kann, steht die Verwendung der Vorrichtung der üblichen manuellen Extraktion in keiner Weise nach.

Mit einem Mehrwegventilsystem wird die Handhabung deutlich vereinfacht.

Mehrere Behälter, z.B. der Reaktionsbehälter, ein Lösungsmittelspeicher oder ein Behälter für die extrahierte Probe, können so auf einfache Weise mit der Transfereinheit verbunden werden. Besonders vorteilhaft lassen sich die beiden Aspekte der Verbindung miteinander kombinieren, indem die Vorrichtung sowohl geeignet ist, um die gesamte Phase zu transferieren, als auch ein Mehrwegventilsystem umfasst.

Die Mittel zum Bestimmen des transferierten Volumens basieren vorteilhaft auf mechanischen Elementen. Diese mechanischen Mittel können beispielsweise auf einer Flussmessung in der Verbindungsleitung oder einer Gewichtsmessung in der Transfereinheit basieren. Wenn die Transfereinheit eine Kolbenanordnung umfasst, z.B. wenn sie auf Spritzen oder Kolbenpumpen beruht, dann kann das transferierte Volumen besonders einfach mit einer Hubmessung bestimmt werden.

In einer alternativen Ausführungsform basieren die Mittel zum Bestimmen des transferierten Volumens auf optischen Elementen. Beispielsweise kann über Laserdetektoren der Flüssigkeitsstand in der Transfereinheit bestimmt werden. Eine optische Sender-Empfänger-Einheit kann z.B. per Reflexion den Flüssigkeitspegel in der Transfereinheit messen.

Vorzugsweise ist eine Vorrichtung zum rechnerischen Bestimmen des erwarteten Volumens der Phasen vorgesehen. Dazu muss die Menge der Probe und des Lösungsmittels genau bekannt sein. Da bekannt ist, welche Komponenten der Probe zu welchem Anteil in das Lösungsmittel übergehen, können die resultierenden Phasenvolumina mit einer geeigneten Rechenanordnung bestimmt werden. Da schwer mischbare Flüssigkeiten verwendet werden und nur kleine Anteile der Probe extrahiert werden, entsprechen die Phasenvolumen üblicherweise den ursprünglichen Volumina der Probe und des Lösungsmittels.

Alternativ kann auch eine Vorrichtung zum Bestimmen des Volumens der Phasen mittels einer Messung vorgesehen sein. Denkbar wären Vorrichtungen, die auf einer optischen Messung basieren. Eine optische Sender-Empfänger-Einheit kann z.B. entlang des Reaktionsbehälters vertikal verschoben werden, wobei ein Lichtstrahl auf das Gefäss gerichtet wird. Ein Anteil des ausgesendeten Lichtes wird von der Flüssigkeit im Behälter reflektiert. Die Reflexionseigenschaften ändern sich an der Phasengrenze sprunghaft. Somit können die Höhen der Phasengrenzen im Reaktionsbehälter bestimmt und mit Hilfe der Geometrie des Reaktionsbehälters die Phasenvolumina berechnet werden.

Besonders vorteilhaft umfasst die Transfereinheit mindestens eine Spritze. Mit einer oder mehreren Spritzen kann die eine Phase aus dem Reaktionsgefäss gesaugt werden. Die Mittel zum Bestimmen des transferierten Volumens sind mit der mindestens einen Spritze gekoppelt und insbesondere zum Messen des Kolbenhubs geeignet. Vorteilhaft werden Einwegspritzen verwendet. Der Aufwand zum Reinigen der Transfereinheit nach erfolgter Extraktion wird dadurch deutlich reduziert. Besonders bevorzugt umfasst die Transfereinheit eine Schnittstelle zum Verbinden von mindestens einer

Einwegspritze mit der Transfereinheit. Die Schnittstelle vereinfacht das Auswechseln der Einwegspritzen nach Gebrauch.

Weiter umfasst die Vorrichtung vorzugsweise eine Steuerungsanordnung, welche sowohl zum Betreiben des Mehrwegventilsystems als auch zum Betreiben der Transfereinheit ausgebildet ist. So kann beispielsweise in einer ersten Stellung des Mehrwegventilssystems eine vorbestimmte Menge einer Flüssigkeit aus einem Vorratsbehälter von der Transfereinheit aufgenommen werden. Sobald die vorbestimmte Menge erreicht ist, werden das Ventil und der Betrieb der Transfereinheit derart umgestellt, dass die Flüssigkeit in ein anderes Gefäss wieder abgegeben wird. So kann z.B. das Lösungsmittel in den Reaktionsbehälter gebracht werden. Dort kann die Extraktion stattfinden. Während einer Ruhephase trennen sich die Phasen. Die Transfereinheit kann nun so betrieben werden, dass die gewünschte Phase aus dem Behälter in die Transfereinheit geleitet wird. Wenn die gesamte Phase in die Transfereinheit transferiert wurde, können das Mehrwegventilsystem und die Transfereinheit so umgestellt werden, dass die transferierte Phase in einen weiteren Behälter abgegeben wird.

In einer besonders bevorzugten Ausführungsform umfass die Vorrichtung weiter eine Schnittstelle zum Verbinden der Vorrichtung mit einem Synthesegerät. Die Schnittstelle ist derart ausgebildet, dass die Vorrichtung auf einfache und eindeutige Weise mit dem Synthesegerät verbunden werden kann. Die Schnittstelle kann sich durch mechanische und/oder elektrische Eigenschaften auszeichnen. Die Vorrichtung könnte also mechanisch und/oder elektrisch mit dem Synthesegerät verbunden werden.

Eine solche Schnittstelle hat den Vorteil, dass kein zusätzliches Gerät im Labor benötigt wird, um eine automatische Flüssig-Flüssigextraktion vorzunehmen. Eine Steuer-/Recheneinheit kann z.B. derart programmiert sein, dass sie sowohl zur Steuerung des Synthesegeräts als auch zur Steuerung der Extraktionsvorrichtung geeignet ist.

Beim erfindungsgemässen Verfahren zum Transfer einer Phase einer phasengetrennten mehrphasigen Flüssigkeit aus einem Behälter, insbesondere bei Flüssigextraktion, wird das Volumen der Phase bestimmt und das transferierte Volumen während dem Transferieren gemessen. Besonders bevorzugt wird die gesamte Phase aus dem Behälter transferiert.

Wie oben beschrieben, wird das Volumen der Phase vorzugsweise rechnerisch bestimmt. Alternativ kann das Volumen der Phase durch eine Messung bestimmt werden, beispielsweise eine optische Messung.

Besonders bevorzugt wird das Volumen mit mindestens einer Spritze transferiert. Da Einwegspritzen verwendet werden können, können sowohl der Reinigungsaufwand als auch die Kosten reduziert werden. Wenn Spritzen verwendet werden, wird das transferierte Volumen vorzugsweise über den Kolbenhub der Spritze gemessen.

Beispielsweise kann der Kolben durch einen Schrittmotor betätigt werden, welcher an eine Rechenanordnung angeschlossen ist.

Das Verfahren zur Flüssig-Flüssigextraktion einer Probe in einem Reaktionsbehälter umfasst die Schritte
a) Transferieren eines Lösungsmittels in eine Transfereinheit, wobei dazu ein Mehrwegventilsystem in einer Verbindungsleitung zwischen dem Reaktionsbehälter und der Transfereinheit eine erste Stellung einnimmt, so dass ein Vorratsbehälter des Lösungsmittel mit der Transfereinheit verbunden ist,
b) Transferieren des Lösungsmittels in den Reaktionsbehälter, wobei dazu das Mehrwegventilsystem eine zweite Stellung einnimmt, so dass der Reaktionsbehälter mit der Transfereinheit verbunden ist,
c) Durchführen der Extraktion im Reaktionsbehälter, wobei in einem ersten Schritt die Extraktion während einer Durchmischung der Probe mit dem Lösungsmittel und in einem zweiten Schritt während einer Ruhezeit die Phasentrennung stattfindet, und
d) Transferieren einer Phase mittels der Transfereinheit in einen weiteren Behälter, insbesondere nach einem Verfahren wie zuvor beschrieben.

Ein Vorteil eines solchen Verfahrens ist, dass die Extraktion weitgehend automatisch abläuft und die Handhabung von aggressiven oder gesundheitsschädlichen Substanzen reduziert werden kann. Besonders vorteilhaft ist, dass durch das automatische Zufügen des Lösungsmittels die Menge des zugefügten Lösungsmittels unmittelbar und sehr exakt bekannt ist.

Im Folgenden wird die Erfindung anhand von Ausführungsbeispielen mit Hilfe von Figuren erläutert. Es zeigt:
Fig. 1: eine schematische Darstellung einer bevorzugten Ausführungsform der Vorrichtung,
Fig. 2a-2d: eine schematische Darstellung des erfindungsgemässen Verfahrens unter Verwendung einer Vorrichtung gemäss

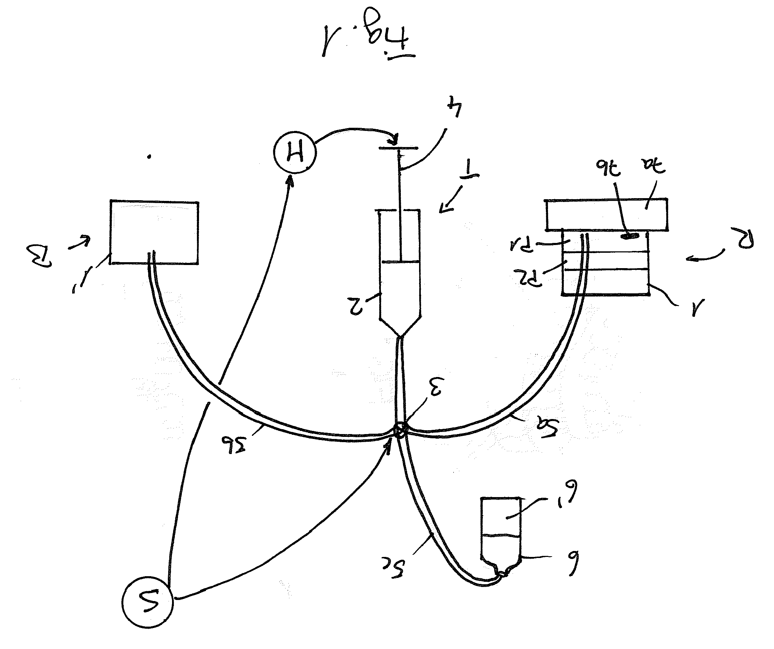

Fig. 1, und

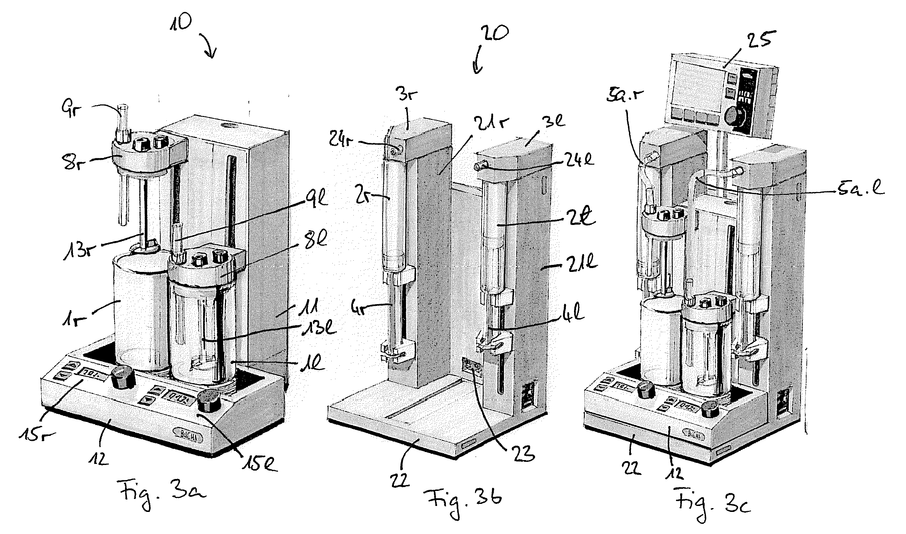

Fig. 3a-3c: eine perspektivische Darstellung eines erfindungsgemässen Zusatzmoduls

Die Vorrichtung gemäss Fig. 1 umfasst einen Reaktionsbehälter R, in diesem Beispiel ein Becherglas 1 mit einem Volumen von 100 ml. Das Becherglas 1 steht auf einer Magnetrührplatte 7a. Der dazu gehörende Magnetstift 7b befindet sich im Becherglas 1.

Während der Extraktion wird mit Hilfe des Magnetrührers eine flüssige Probe mit einem Lösungsmittel vermischt. Im Becherglas 1 sind die beiden Phasen P1 und P2 dargestellt, welche sich nach der Extraktion und einer gegebenen Ruhezeit trennen.

Die Transfereinheit T ist in diesem Ausführungsbeispiel eine Einwegspritze 2 mit einem Volumen von 60 ml. Die Spritze 2 kann über einen Verbindungsschlauch 5a mit dem Becherglas 1 verbunden werden. Die Spritze kann aber über einen Schlauch 5c auch mit einer Lösungsmittelflasche 6 oder über einen Schlauch 5b mit einem zweiten Becherglas 1' verbunden werden. Welcher der Schläuche 5a, 5b oder 5c mit der Spritze 2 verbunden ist, wird über einen Verteilhahn 3 eingestellt.

Der Verteilhahn 3 wird von einer Steueranordnung S betätigt. Der Kolben 4 der Spritze 2 wird von der gleichen Steueranordnung S kontrolliert und mit einem Schrittmotor M elektrisch betrieben.

Die Position des Kolbens 4 wird von der Steueranordnung S laufend gemessen. Somit ist der Kolbenhub immer bekannt. Wenn die Schrittgrösse und Schrittanzahl des Motors M bekannt sind, kann daraus der Kolbenhub und somit das transferierte Volumen berechnet werden.

Die Phase P1 soll in einen Behälter B transferiert werden, welcher das zweite Becherglas 1' ist. Da die Phase P1 schwerer ist als die Phase P2, ist der Schlauch 5a ganz in das Becherglas 1 getaucht. Wenn die leichtere Phase P2 transferiert werden sollte, würde der Schlauch 5a entsprechend weniger tief in das Becherglas 1 getaucht werden.

Das Extraktionsverfahren mit dieser Vorrichtung läuft wie folgt ab: Nachdem eine Probe in das Becherglas 1 gegeben wurde, soll diesem ein Lösungsmittel 6' zugegeben werden. Dazu wird der Verteilhahn 3 durch die Steueranordnung S so eingestellt, dass die Spritze 2 mit der Lösungsmittelflasche 6 verbunden ist. Durch Herausziehen des Kolbens 4 wird Lösungsmittel 6' in die Spritze gesaugt. Die Steueranordnung steuert den Motor M und bestimmt somit die Bewegung des Kolbens 4 und die Menge des angesaugten Lösungsmittels.

Sobald die vorbestimmte Menge an Lösungsmittel in der Spritze 2 ist, wird die Bewegung des Kolbens 4 durch die Steueranordnung gestoppt und der Verteilhahn 3 derart umgestellt, dass die Verbindung zum Schlauch 5a offen ist. Anschliessend wird der Kolben 4 wieder in die Spritze 2 geschoben, wodurch das Lösungsmittel 6' in das Becherglas 1 transferiert wird. Falls mehr Lösungsmittel 6' verwendet werden soll, als die Spritze 2 zu fassen vermag, werden die obigen Schritte entsprechend oft wiederholt.

Damit nun eine Extraktion stattfinden kann, wird der Magnetrührer 7a, 7b eingeschaltet und die Probe homogen mit dem Lösungsmittel vermischt. Nach einer vorgegebenen Extraktionszeit wird der Magnetrührer 7a, 7b ausgeschaltet, und die Phasen P1 und P2 beginnen sich zu trennen.

Nach Ablauf der Ruhezeit sind die Phasen P1 und P2 vollständig getrennt. Darauf hin wird der Kolben 4 wieder zurückgezogen, wodurch die Phase P1 in die Spritze 2 gesaugt wird. Das Volumen des zugeführten Lösungsmittels entspricht dem Volumen der Phase P1. Dieses bekannte Volumen wird in die Spritze 2 gesaugt. Das Volumen wird wiederum über den Kolbenhub der Spritze 2 gemessen. Wenn die gesamte Phase P1 in die Spritze 2 gesaugt wurde, wird der Kolben 2 wieder von der Steueranordnung S gestoppt. Der Verteilhahn 3 wird derart umgestellt, dass der Schlauch 5b mit der Spritze verbunden ist. Darauf hin wird der Kolben 4 wieder eingeschoben und die Phase P1 aus der Spritze 2 in das Becherglas 1' transferiert. Falls das Volumen der Phase P1 das Volumen der Spritze 2 übersteigt, können die obigen Schritte wiederholt werden. Wenn die Probe nur einmal ausgeschüttelt werden soll, ist die Extraktion mit diesem Schritt abgeschlossen. Falls ein weiteres Ausschütteln erwünscht ist, kann in das Becherglas 1' wieder Lösungsmittel zugegeben und die Extraktion wiederholt werden.

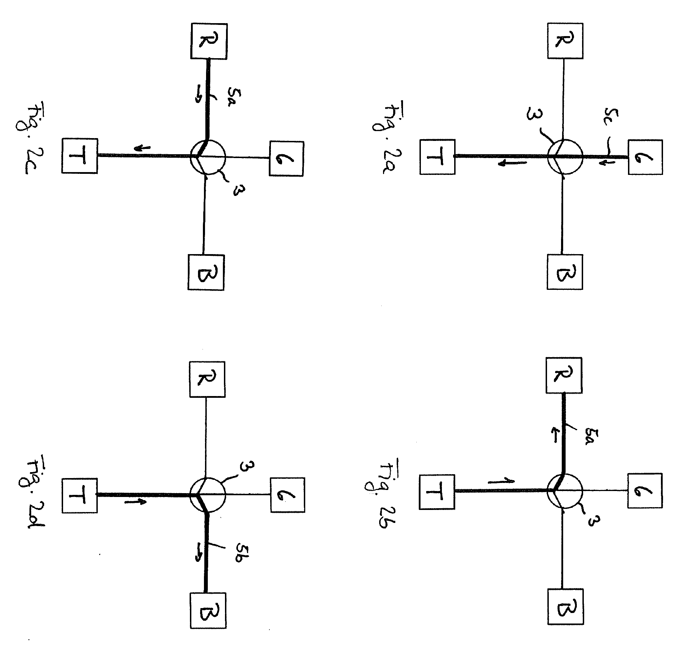

Die zuvor beschriebenen Schritte sind in Fig. 2a bis 2d in einer schematischen Skizze dargestellt. Fig. 2a zeigt die Position des Verteilhahns zu Beginn des Verfahrens, wenn das Lösungsmittel 6a aus dem Behälter 6 in die Transfereinheit T geführt wird. Die offene Leitung 5c ist fett markiert. Die Pfeile geben die Strömungsrichtung des Lösungsmittels 6' an.

In Fig. 2b ist dargestellt, wie das Lösungsmittel 6' in den Reaktionsbehälter R transferiert wird. Dazu ist der Hahn 3 so ein gestellt, dass die Leitung 5a offen ist. Die Pfeile geben wiederum die Strömungsrichtung an.

Aus Fig. 2c ist ersichtlich, dass die Stellung des Hahns 3 für den nächsten Schritt nicht verändert wird. Nachdem die Extraktion stattgefunden hat und die Phasen getrennt wurden, wird die

Phase P1 über die Leitung 5a in die Transfereinheit gebracht.

Die Stellung des Hahns ist die gleiche wie zum transferieren des Lösungsmittels in den Reaktionsbehälter R, der Betrieb der Transfereinheit ist jedoch umgestellt.

In Fig. 2d ist schliesslich der Transfer der Phase P1 in den Behälter B dargestellt. Dazu wird der Hahn 3 derart umgestellt, dass die Leitung 5b offen ist. Die Strömungsrichtung der Phase P1 ist mit Pfeilen angedeutet.

In Fig. 3a bis 3c sind ein Synthesegerät 10 und ein Zusatzmodul 20 für das Synthesegerät 10 dargestellt. Das Zusatzmodul 20 arbeitet im Wesentlichen wie die zuvor beschriebene Vorrichtung.

Das Synthesegerät 10 ist wie in Fig. 3a gut ersichtlich geeignet, dass zwei unabhängige Reaktionen gleichzeitig stattfinden können. Zwei Gefässe 1r und 11 verfügen über unabhängige Anschlussplatten 8r und 81. An den Anschlussplatten 8r und 81 ist je eine Schlauchverbindung 9r und 91 und je ein Rührstab 13r und 131 vorgesehen. Weitere Elemente, z.B. Temperaturfühler zum Messen der Temperatur der Flüssigkeit in den Behältern 1r und 11 oder Kühlkörper zum selektiven Kühlen können ebenfalls an die Anschlussplatten 8r und 81 angebracht werden.

Beide Gefässe 1r und 11 stehen auf der gleichen Grundplatte 12, welche jedoch über zwei separat ansteuerbare Bereiche (nicht dargestellt) verfügt. Die Grundplatte 12 umfasst Heizelemente, so dass in den Gefässen 1r und 11 Reaktionen bei erhöhten Temperaturen durchgeführt werden können. Ebenfalls in der Grundplatte angeordnet ist Rechen- und Steueranordnung (nicht sichtbar), welche mit den Heizelementen und den Rührern kommuniziert. Angesteuert wird die Rechen- und Steueranordungung über die Benutzeroberflächen 15r und 151.

Ein Gehäuse 11 dient zur mechanischen Stützung der Anschlussplatten 8r und 81. Die Höhe der Anschlussplatten 8r und 81 wird manuell eingestellt.

Auch das Zusatzmodul 20 umfasst zwei voneinander unabhängige Seiten. Zwei Spritzen 2r und 21 sind geeignet, mit dem jeweiligen Gefäss 1r und 11 verbunden zu werden. Das Zusatzmodul 20 umfasst keine eigene Rechenanordnung. In den Gehäusen 21r und 211 sind die Motoren (nicht dargestellt) zum Betreiben der Kolben 4r und 41 und der Mehrwegventile 3r und 31 angeordnet. Über eine Schnittstelle 23 wird die Verbindung der Motoren mit der Rechenund Steueranordnung des Synthesegeräts hergestellt. Das Gegenstück zur Schnittstelle 23 befindet sich auf der Rückseite des Gehäuses 11 und ist in den Fig. 3a bis 3c nicht sichtbar. Eine Grundplatte 22 ist einerseits für den sichern Stand des Zusatzmoduls 20 andererseits für die genaue Ausrichtung des Synthesegeräts 10 vorgesehen.

Die Mehrwegventile 3r und 31 verfügen über einen Anschluss 24r und 241 nach vorne und zwei weitere, nicht sichtbare Anschlüsse auf der Rückseite. Diese weiteren Anschlüsse können mit weiteren Gefässen verbunden werden, z.B. mit einem Lösungsmittelbehälter.

In Fig. 3c ist das Zusammenspiel der Syntheseeinheit 10 und des Zusatzmoduls 20 sichtbar. Auf die Grundplatte 22 des Zusatzmoduls 20 passt die Grundplatte 12 der Syntheseeinheit 10. Mit Schläuchen 5a.r und 5a.1 wird werden die Spritzen 2r und 21 mit den Gefässen 1r und 11 verbunden. Angesteuert werden die Motoren des Zusatzmoduls 20 über die Anzeige- und Benutzeroberfläche 25, welche zusätzlich mit dem Synthesegerät 10 verbunden wird. Die Anzeige- und Benutzeroberfläche 25 kommuniziert mit der Rechenund Steueranordnung des Synthesegeräts 10, so dass z.B. der Rührer auch über die Anzeige- und Benutzeroberfläche 25 angesteuert werden kann.

## Patentansprüche

1. Vorrichtung zur automatischen Flüssig-Flüssigextraktion, umfassend mindestens einen Reaktionsbehälter (R) und eine Transfereinheit (T) zum Transferieren einer Phase (P1) einer phasengetrennten mehrphasigen Flüssigkeit aus dem Reaktionsbehälter (R) in mindestens einen weiteren Behälter (B), wobei die Vorrichtung Mittel zum Bestimmen des Phasenvolumens von mindestens einer Phase (P1) und die Transfereinheit (T) Mittel zum Messen des transferierten Volumens enthält, so dass die gesamte Phase (P1) aus dem Reaktionsbehälter (R) in den weiteren Behälter (B) transferierbar ist.

2. Vorrichtung zur automatischen Flüssig-Flüssigextraktion, insbesondere eine Vorrichtung nach Anspruch 1, umfassend mindestens einen Reaktionsbehälter (R) und eine Transfereinheit (T) zum Transferieren einer Phase (P1) einer phasengetrennten mehrphasigen Flüssigkeit aus dem Reaktionsbehälter (R) in mindestens einen weiteren Behälter (B), wobei in einer Verbindungsleitung zwischen der Transfereinheit (T) und dem Reaktionsbehälter (R) mindestens ein Mehrwegventilsystem (3; 3r, 31), insbesondere ein Verteilhahn (3), zum selektiven Verbinden der Transfereinheit (T) mit weiteren Behältern (6, B) vorgesehen ist.

3. Vorrichtung gemäss Anspruch 2, **dadurch gekennzeichnet, dass** eine Steuerungsanordnung (S) sowohl zum Betreiben des Mehrwegventilsystems (3; 3r, 31) als auch zum Betreiben der Transfereinheit (T) ausgebildet ist.

4. Vorrichtung gemäss einem der Ansprüche 1 oder 3, **dadurch gekennzeichnet, dass** die Mittel zum Bestimmen des transferierten Volumens auf mechanischen Elementen basieren.

5. Vorrichtung gemäss einem der Ansprüche 1 bis 4, **dadurch gekennzeichnet, dass** eine Vorrichtung zum rechnerischen Bestimmen des Volumens von mindestens einer Phase (P1) vorgesehen ist.

6. Vorrichtung gemäss einem der Ansprüche 1 bis 5, **dadurch gekennzeichnet, dass** die Transfereinheit (T) mindestens eine Spritze (2; 2r, 21) umfasst.

7. Vorrichtung gemäss Anspruch 6, **dadurch gekennzeichnet, dass** die Transfereinheit eine Schnittstelle zum Verbinden von mindestens einer Einwegspritze mit Transfereinheit umfasst.

8. Vorrichtung gemäss Anspruch 6 oder 7, **dadurch gekennzeichnet, dass** die Mittel zum Bestimmen des transferierten Volumens an den Kolben (4) der mindestens einen Spritze (2) gekoppelt sind, insbesondere zum Messen des Kolbenhubs geeignet sind.

9. Vorrichtung nach einem der vorangehenden Ansprüchen, **dadurch gekennzeichnet, dass** die Vorrichtung eine mechanische und/ oder elektrische Schnittstelle (23) für eine Syntheseeinheit (10) umfasst.

10. Verfahren zum Transfer einer Phase (P1) einer phasengetrennten mehrphasigen Flüssigkeit aus einem Behälter (R), insbesondere bei Flüssigextraktion, wobei
das Volumen der Phase (P1) bestimmt wird, und
das transferierte Volumen während dem Transferieren gemessen wird,
so dass vorzugsweise die gesamte Phase (P1) aus dem Behälter (R) transferiert wird.

11. Verfahren gemäss Anspruch 10, **dadurch gekennzeichnet, dass** das Volumen der Phase (P1) rechnerisch bestimmt wird.

12. Verfahren gemäss einem der Ansprüche 10 oder 11, **dadurch gekennzeichnet, dass** das Volumen mit mindestens einer Spritze (2; 2r, 21) transferiert wird.

13. Verfahren gemäss Anspruch 12, **dadurch gekennzeichnet, dass** das transferierte Volumen über den Hub der mindestens einen Spritze (2) gemessen wird.

14. Verfahren zur Flüssig-Flüssigextraktion einer Probe in einem Reaktionsbehälter (R), umfassend die Schritte
a) Transferieren eines Lösungsmittels in eine Transfereinheit (T), wobei dazu ein Mehrwegventilsystem (3; 3r, 31) in einer Verbindungsleitung zwischen dem Reaktionsbehälter (R) und der Transfereinheit (T) eine erste Stellung einnimmt,
b) Transferieren des Lösungsmittels in den Reaktionsbehälter (R), wobei dazu das Mehrwegventilsystem (3; 3r, 31) eine zweite Stellung einnimmt,
c) Durchführen der Extraktion im Reaktionsbehälter (R), und
d) Transferieren einer Phase (P1) mittels der Transfereinheit (T) in mindestens einen weiteren Behälter (B), insbesondere nach einem Verfahren gemäss der Ansprüche 9 bis 13.
